## Europäisches Patentamt
## European Patent Office
## Office européen des brevets

(19)

(11) Publication number: **0 102 799**
**B1**

(12)

# EUROPEAN PATENT SPECIFICATION

(45) Date of publication of patent specification: **25.11.87**

(51) Int. Cl.⁴: **G 11 B 7/00, H 04 N 5/85**

(21) Application number: **83304832.5**

(22) Date of filing: **22.08.83**

(54) Optical disk recording and reproducing method and optical disk used in the same.

(30) Priority: **24.08.82 JP 147134/82**

(43) Date of publication of application:
**14.03.84 Bulletin 84/11**

(45) Publication of the grant of the patent:
**25.11.87 Bulletin 87/48**

(84) Designated Contracting States:
**DE FR GB NL**

(56) References cited:
**EP-A-0 055 439**
**AT-B- 371 273**
**DE-A-3 100 278**

**JOURNAL OF THE OPTICAL SOCIETY OF AMERICA, vol. 69, no. 1, January 1979, American Institute of Physics, H.H. HOPKINS "Diffraction theory of laser read-out systems for optical video discs", pages 4-24**

(73) Proprietor: **Matsushita Electric Industrial Co., Ltd.**
**1006, Oaza Kadoma**
**Kadoma-shi Osaka-fu, 571 (JP)**

(72) Inventor: **Nagashima, Michiyoshi**
**49-56-407, Korienyamanotecho**
**Hirakata-shi (JP)**
Inventor: **Kashihara, Toshiaki**
**31-8, Higashinakaburi-1-chome**
**Hirakata-shi (JP)**
Inventor: **Takenaga, Mutsuo**
**12-305, Ikuno-4-chome**
**Katano-shi (JP)**

(74) Representative: **Grundy, Derek George Ritchie et al**
**CARPMAELS & RANSFORD 43, Bloomsbury Square**
**London WC1A 2RA (GB)**

## Description

The present invention relates to a method of recording and reproduction of information in double the recording density on a recording medium which is recorded by irradiation of a light beam (i.e. optical-disk), and also to an optical disk used in the recording and reproduction method.

A laser is used to record and reproduce video and audio information by focusing a laser beam to form a fine spot on an optical disk. As a reproduction-only unit, "Video Disks" are already available on the market, and there have been made advances of developing the method of recording and reproducing discrete information, which are expected to appear as "Data Files" and "Recording/Reproducing Video Files".

In the method of forming an information surface on a plane, where the track pitch is 1.67 μm, it is difficult to increase the recording density. On this account, there has been proposed an information signal surface wherein the optical disk has approximate V-shaped or inverse trapezoidal grooves in its radial cross section to provide slants for recording, thereby halving the track pitch, increasing the recording density, and reducing crosstalk between adjacent tracks.

For example, Japanese Patent Laid-open specification No. 56-58144 discloses a method of projecting a laser beam as normal as possible to the slant of a V-shaped or inverse trapezoidal groove by conducting the laser beam obliquely to a lens. In general, a light beam entering obliquely to a high NA lens cannot be focused sufficiently due to aberration. Particularly, for a lens with an NA of around 0.5, when a laser beam enters the lens at an angle of 2—3 degrees or more with respect to the optical axis, the influence of aberration is too large to bring the above method into practice.

A more practical method of increasing the recording density is disclosed in Japanese Patent Laid-open specification No: 57-105828 and this method will be explained briefly hereinbelow taking an example of the case of an optical disk having V-shaped grooves and using the reflected light from the optical disk for reproduction.

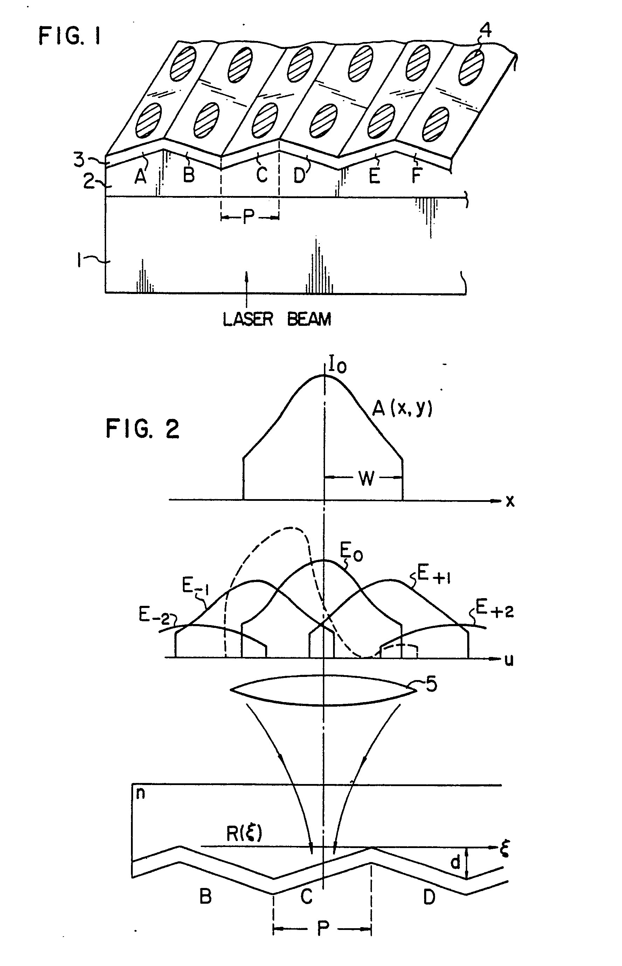

Fig. 1 is an illustration explaining an example of the optical disk. In the figure, reference numeral 1 denotes the substrate of the disk, 2 is a layer of ultraviolet-hardened resin (UV resin) provided over the substrate with grooves having a V-shaped cross section formed therein, 3 is a thin film of recording material, and 4 is a signal dot written by irradiation of a laser beam onto the recording film 3. The dot has a refractivity and optical density varied by writing or it is recessed by vaporization. In the structure of Fig. 1, the laser beam is entered through the substrate 1 to record or reproduce information. Accordingly, transparent materials are used for the substrate 1 and UV resin 2.

A beam spot is projected on to a slant of the V-shape groove along, for example, face C in Fig. 1 so as to record an information dot 4. With dimensions being determined such that 2P (in Fig. 1) is equal to the track pitch of the conventional system, the signal on face C can be reproduced with less signal mixture (crosstalk) from faces A and E even with a reproduction optical system used in the conventional reproduction-only video disk. However, signals are also recorded on faces B and D for the purpose of doubling the recording density, and the shape of the cross section of the V-shape groove is determined so that crosstalk of signals from faces B and D to the reproduction of face C is small enough to ensure the quality of signal. The details of this recording and reproduction method are disclosed in Japanese Patent Laid-open specification No. 57-105828.

With the V-shape groove having a depth of $\lambda/4n$, where n is the refraction index of the material adjacent to the groove at the entry of the laser beam, the diffraction beam of the $-1$st order includes only information on face C, and therefore by the reception of the laser beam centered at the $-1$st order diffraction for reproducing the face C, crosstalk from faces B and D can be reduced.

For further reduction of crosstalk, it is advisable to avoid interference between the $-1$st diffraction beam and 0th order diffraction beam in receiving the laser beam centered at the $-1$st diffraction since the 0th order diffraction beam includes information on faces B and D. If an incident beam Io enters the entire surface of a lens 5, the whole reflective diffraction beam passing through the lens interferes with the 0th order diffraction beam because diffraction beams of each order have the same spread as that of the incident beam. Accordingly, if the incident beam does not enter the periphery of the lens, the 0th order diffraction beam does not pass through the peripheral portion, allowing the reception of the diffraction beam reflected on the periphery of the lens.

The foregoing method can double the recording density of the optical disk. For example, an optical video disk with a diameter of 30 cm can record and reproduce moving pictures on both sides for a duration of two hours in a constant angular velocity mode which allows trick reproduction or four hours in a constant linear velocity mode. A prerequisite for doubling the recording density using the slant sides of a V-shape groove as a signal recording surface is that a laser spot must be projected along the slant of a groove, namely, the system must be capable of tracking. One object of the present invention is to provide a method of tracking for this purpose.

EP—A—53439 discloses an optical disc having a V-shaped groove with a pair of slant faces, said slant faces being adapted for recording information thereon in spiral or concentric grooves. The depths of the V-shaped grooves in adjacent tracks change with frequencies $f_1$ and $f_2$. DE—A—3 100 278 discloses an optical disc on which a clock signal is pre-recorded by a modulated laser beam whereby a groove modulated either in depth or radially is formed. The information is recorded at the bottom of the groove.

The present invention relates to an optical disc having a V-shaped groove with a pair of slant faces, said slant faces being adapted for recording information thereon in spiral or concentric grooves.

The invention provides such an optical disc in which the groove is formed to wobble radially along the track direction of the disc and at a predetermined spatial frequency.

The invention also provides a method of tracking an information track on such a disc, the method comprising the steps of:—

(a) focusing a laser beam to a spot on a slant of the V-shaped groove;

(b) sensing intensity variations in laser light reflected from said slant face of the V-shaped groove;

(c) deriving a signal component having a frequency corresponding to said spatial frequency; and

(d) comparing the phase of the signal component with the phase of a reference signal and displacing the laser spot radially inwardly or outwardly of a tracking path depending on the respective slope of the slant face and with a magnitude depending on the detected amplitude of said signal component.

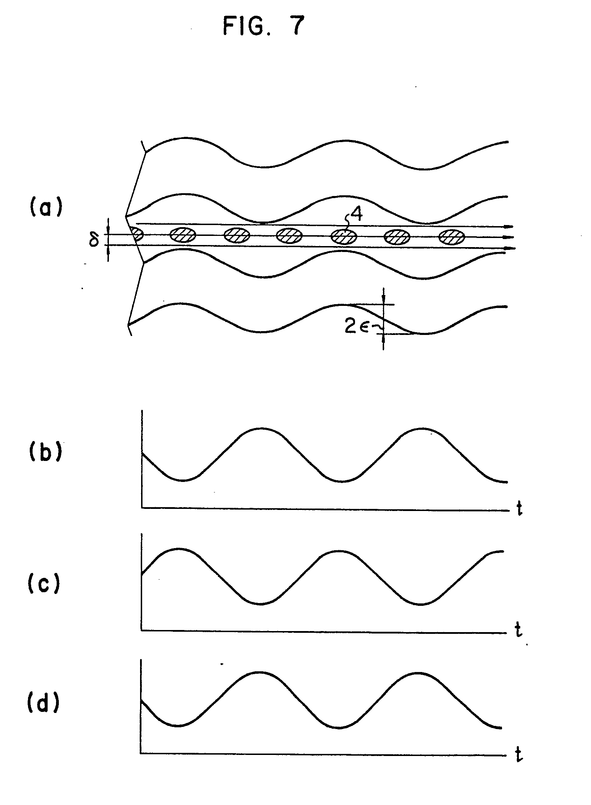

An embodiment of the invention will now be described mainly with reference to Fig. 7 of the accompanying drawings, in which:

Fig. 1 is a sectional perspective view showing the structure of an optical disc provided with V-shaped grooves;

Fig. 2 is a diagram explaining amplitude distributions of an incident beam and reflected beam from slant faces of a V-shaped groove;

Fig. 3 is a diagram showing the pattern of the diffraction beams reflected onto a lens surface;

Fig. 4 is a diagram showing deviation of the V-shaped groove;

Fig. 5 is a diagram showing a tracking signal;

Figs. 6, 8a and 8b are diagrams showing photo-sensor portions for detecting a beam reflected onto the lens surface;

Fig. 7, (a) is an explanatory plan view of a wobbling V-shaped groove according to an embodiment of the present invention; wherein wobbling thick lines indicate top and bottom portions of the grooves;

Fig. 7, (b) is a diagram showing a reference signal related to the wobbling of the V-shaped groove;

Figs. 7, (c) and (d) are diagrams explaining the reflected beams which vary at the wobbling frequency; and

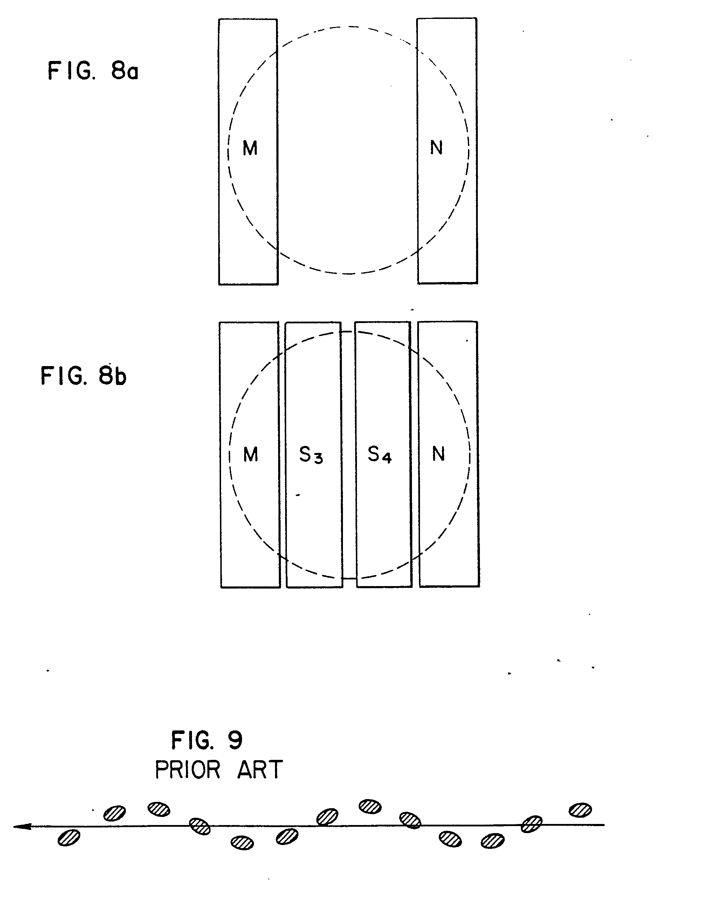

Fig. 9 is an illustration explaining a conventional pattern in which wobbling recording pits are formed.

According to the present invention, the V-shaped groove is formed in a wobbling fashion in the radial direction of the disc. As the disc rotates, the groove appears to wobble with a small amplitude (e.g., 0.1 μm) in the disk radial direction at a frequency different from that of a video information signal. The disk reflection beam varies at a frequency which is composed of the signal frequency and the wobbling frequency. These frequencies are separated by an electric circuit so that tracking is performed using a reflection beam which varies at the wobbling frequency. Accordingly, it is not necessary to take the information signal into consideration to achieve the object of the present invention, and the following discussion is therefore based on the assumption that the entire slant face of the V-shape groove has a uniform reflectivity.

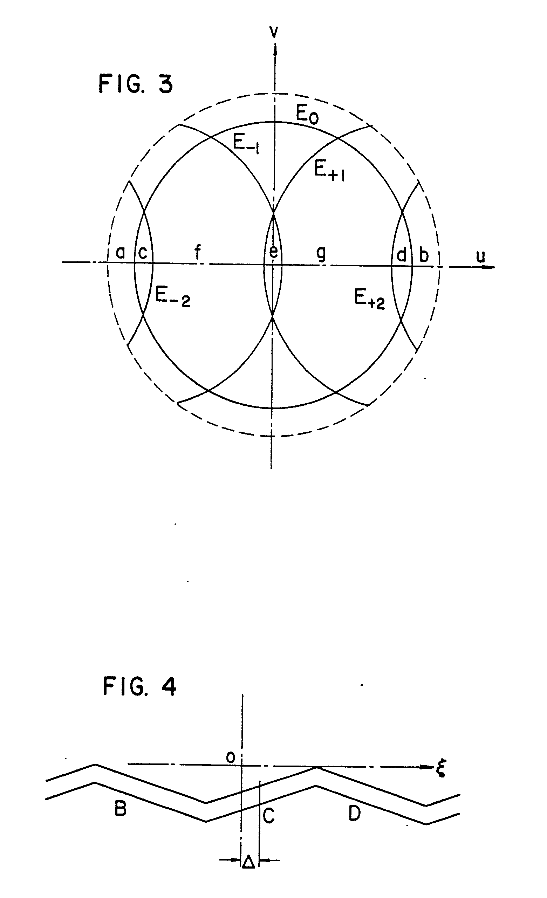

A light beam entering a lens is focused on an optical disk which functions as a diffraction grating, and a reflection beam from or transmission beam through the disk is separated into many diffraction beams. The following describes the case of a reflection beam referring to Fig. 2. On the plane of a lens 5, the x axis is defined in the radial direction of the disk, and the y axis is defined perpendicularly to the drawing, i.e., in the tangential direction to the circumference of the disk. A laser beam lo entering the lens 5 is assumed to have an amplitude distribution expressed by function A (x, y). The incident laser beam has a spread with a radius of W, where

$$x^2+y^2\leq W^2.$$

When defining a coordinate system by ξ axis and η axis on the disk plane in parallel to the x axis and y axis, respectively, the distribution of the complex reflectivity (complex reflection coefficient) on the disk surface with respect to the amplitude of the light beam is defined by R (ξ), where the reflectivity distribution of the disk in the η-direction can be considered uniform because the diameter of the laser spot is much smaller than the period of the wobbling of the V-shape grooves, and the entire slant faces of the V-shape grooves are assumed to have uniform reflectivity as mentioned above. As a coordinate system for the reflection beam on the lens plane, u axis and v axis are set in parallel with the x axis and y axis, respectively.

The arrangement of grooves according to the preferred embodiment of the invention has a periodic interval of 2P as shown in Fig. 1, causing the complex reflectivity distribution R (ξ) to be periodic (interval: 2P) along the ξ axis; by the computation using Fourier expansion

$$R(\xi)=\sum_l R_l \exp \left(2\pi i \frac{l}{2P}\xi\right) \qquad (1)$$

the reflection beam on the uv plane, U (u, v), is given as follows.

$$U\ (u,\ v)=\sum_l R_l E_l\ (u,\ v)$$

$$E_l\ (u,\ v)=A\ (-u+\frac{\lambda f}{2P}l,\ v)$$

$$(-u+\frac{\lambda f}{2P}l)^2+v^2\le W^2$$

$$\quad (2)$$

The introduction of these equations is described in detail in publication, J. Opt. Soc. Am., Vol. 69, No. 1, p. 4, by H. H. Hopkins, though the coordinate systems are set differently in the publication.

In Equation (2), f denotes the focal length of the lens 5, and $\lambda$ is the wavelength of the laser.

In this situation, the following can be said in general. The reflection beam is separated into many diffraction beams, and $E_l$ (where $l=0,\ \pm 1,\ \pm 2,\ ...$) represents the diffraction beam amplitude of the lth order on the uv plane. Every diffraction beam amplitude $E_l$ has the same radius W of spread as of the incident beam amplitude $A\ (x,\ y)$ and analogous intensity distribution. Diffraction beams are spaced from each other on the uv plane by f/2P as illustrated in Fig. 3. The intensity and phase of each reflective diffraction beam $E_l$ are determined by complex coefficient $R_l$ of Fourier expansion of $R\ (\xi)$ with an periodic interval of 2P in the $\xi$ axis direction.

It is assumed that the center of the laser spot is set at the origin of the $\xi\eta$ coordinate system. The disk is rotated and the V-shape groove is wobbled periodically in the $\xi$ axis direction, resulting in an amplitude variation in the time domain as expressed by $\varepsilon\sin\omega t$. The amplitude of wobbling is, for example, around $2\varepsilon=0.1\ \mu m\ (\varepsilon\ll p)$, and the wobbling frequency is $f_0=\omega/2\pi$. The center of slant C is displaced by $+\delta$ from the origin which is the center of the laser spot. Fig. 4 shows the displacement of

$$\Delta=+\delta+\varepsilon\sin\ \omega t$$

as a result of displacement of track and wobbling. In the state of Fig. 4, the complex reflectivity $\widetilde{R}\ (\xi)$ is expressed as:

$$\widetilde{R}\ (\xi)=\sum_l \widetilde{R}_l\ exp\ (2\pi i\frac{l}{2P}\xi)$$

$$=R\ (\xi-\delta-\varepsilon\sin\ \omega t) \quad (3)$$

and using Equation (1), it is reduced to:

$$\widetilde{R}_l=R_l\ exp\ [-i\frac{\pi l}{p}(\delta+\varepsilon\sin\ \omega t)] \quad (4)$$

With slants of a groove having a uniform reflectivity of 1.0 and the groove having a depth d of $\lambda/4n$, the coefficients $\widetilde{R}_l$ are given as:

$$\widetilde{R}_0=i\frac{2}{\pi}$$

$$\widetilde{R}_{\pm 1}=\mp i\frac{1}{2}\ exp\ [\mp i\pi(\frac{\delta}{p}+\frac{\varepsilon}{p}\sin\ \omega t)]$$

$$\widetilde{R}_{\pm 2}=i\frac{2}{3\pi}\ exp\ [\mp 2\pi i\ (\frac{\delta}{p}+\frac{\varepsilon}{p}\sin\ \omega t)]$$

$$\quad (5)$$

Using Equations (2) and (5), the reflection beam amplitude $U\ (u,\ v)$ on the uv plane can be obtained, and the intensity is given by squaring the absolute value of $U\ (u,\ v)$.

In general, the intensity of light at point $(u,\ v)$ is given by the following equation and indicated as dashed curve in Fig. 2.

$$I\ (u,\ v)=a_1+a_2\ cos\ (\pi\frac{\Delta}{p})+a_3\ cos(2\pi\frac{\Delta}{p}) \quad (6)$$

where $a_1$, $a_2$ and $a_3$ are functions of the point $(u,\ v)$. The term for the tracking signal related to $\varepsilon\sin\ \omega t$ is expressed by the following equation in consideration of $\varepsilon\ll p$ and by ignoring terms of second and higher orders of $(\varepsilon/p)$:

$$T\ (u,\ v)=-\pi\ [a_1\ sin\ (\frac{\pi\delta}{p})+2a_2\ sin\ (\frac{2\pi\delta}{p})]$$

$$x\frac{\varepsilon}{p}\sin\ \omega t \quad (7)$$

Integration of Equation (7) in a predetermined specified area on the uv plane represents the signal.

Consideration is made on the first term of Equation (7):

$$T'=-\pi a_1\frac{\varepsilon}{p}\sin\ (\frac{\pi\delta}{p})\ \sin\ \omega t \quad (7')$$

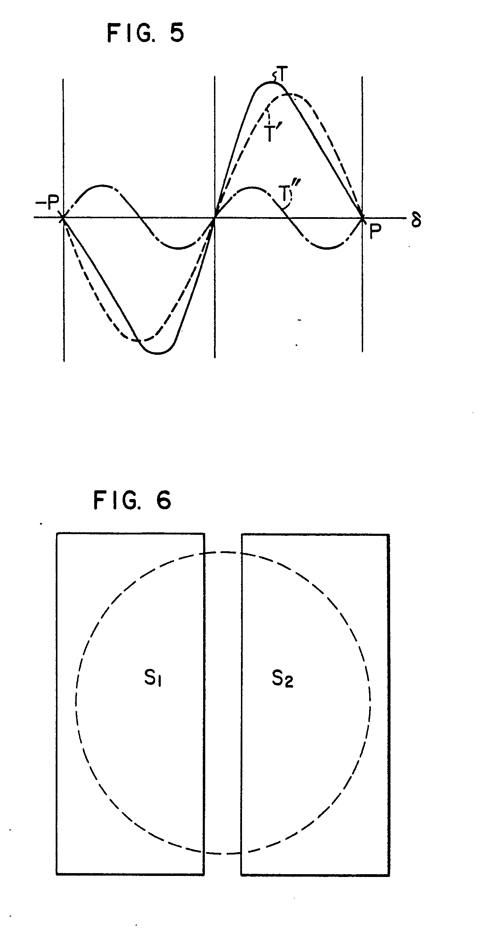

The magnitude of displacement $\delta$ of the track can be evaluated by the magnitude of signal T'. The polarity of T' depends on the polarity of $\delta$. Namely, the signal T' has one of two phases departing from each other by 180° depending the polarity of $\delta$, and the direction of track displacement can be known by checking if the signal T' is in the same or opposite phase with a reference signal indicating the state of wobbling of the V-shape groove. The variation of signal T' with respect to the track displacement is shown by the dashed line in Fig. 5.

Next, consideration is made on the second term of Equation (7):

$$T''=-2\pi a_2\frac{\varepsilon}{p}\sin\ (\frac{2\pi\delta}{p})\ \sin\ \omega t \quad (7'')$$

This signal T″ becomes zero at

$$\delta = \pm \frac{p}{2},$$

i.e., at the top and bottom of each groove, making the tracking signal T unstable. Fig. 5 also shows the signal T″ by the dash-dot line, and the signal T which is the sum of the signals T′ and T″ by the solid line. The signal T″ appears in the region where the +1st order diffraction beam and −1st order diffraction beam interfere with each other and also in the region where the ±2nd diffraction beams and the 0th order diffraction beam interfere with each other (regions c, d and e in Fig. 3). However, these regions are small enough as shown in Fig. 3, and the unstable tracking signal component is also small.

Assuming that the amplitude distribution of the incident laser beam is uniform (A=1.0), terms dependent on εsin ωt for regions a through g in Fig. 3 are obtained as follows.

$$
\left.
\begin{aligned}
T_a &= -\frac{2}{3}\sin\left(\pi\frac{\delta}{p}\right)\frac{\varepsilon}{p}\sin \omega t \\[6pt]
T_b &= +\frac{2}{3}\sin\left(\pi\frac{\delta}{p}\right)\frac{\varepsilon}{p}\sin \omega t \\[6pt]
T_c &= -\frac{8}{3}\sin\left(\pi\frac{\delta}{p}\right)\frac{\varepsilon}{p}\sin \omega t \\[6pt]
&\quad -\frac{16}{3\pi}\sin\left(2\pi\frac{\delta}{p}\right)\frac{\varepsilon}{p}\sin \omega t \\[6pt]
T_d &= +\frac{8}{3}\sin\left(\pi\frac{\delta}{p}\right)\frac{\varepsilon}{p}\sin \omega t \\[6pt]
&\quad -\frac{16}{3\pi}\sin\left(2\pi\frac{\delta}{p}\right)\frac{\varepsilon}{p}\sin \omega t \\[6pt]
T_e &= \pi \sin\left(2\pi\frac{\delta}{p}\right)\frac{\varepsilon}{p}\sin \omega t \\[6pt]
T_f &= -2\sin\left(\pi\frac{\delta}{p}\right)\frac{\varepsilon}{p}\sin \omega t \\[6pt]
T_g &= +2\sin\left(\pi\frac{\delta}{p}\right)\frac{\varepsilon}{p}\sin \omega t
\end{aligned}
\right\} \quad (8)
$$

The unstable tracking signal component appears in regions c, d and e, as mentioned previously, and it is symmetric with respect to the v axis in Fig. 3. The stable tracking signal component is anti-symmetric with respect to the v axis.

The following describes the case where the laser beam is received in two regions $S_1$ and $S_2$ as shown in Fig. 6. The region $S_1$ includes region c where the 0th order diffraction beam and −2nd order diffraction beam interfere with each other, and the region $S_2$ includes region d where the 0th order diffraction beam and +2nd order diffraction beam interfere with each other. In these regions, the signal T″ of Equation (7″) appears, and it is expressed for both the regions $S_1$ and $S_2$ as follows:

$$T'' = -\frac{16}{3\pi}\frac{\varepsilon}{p}\sin\left(2\pi\frac{\delta}{p}\right)\sin \omega t \qquad (9)$$

Accordingly, if the signal from region $S_1$ is $T_1$ and the signal from region $S_2$ is $T_2$, the term of T″ is eliminated by $T_1$—$T_2$. Although the central portion of the lens also includes region e where the +1st order diffraction beam interferes with the −1st diffraction beam to produce signal T″, the component of T″ can be eliminated by $T_1$—$T_2$ when the regions $S_1$ and $S_2$ are placed symmetrically with respect to the lens center. Signals of other regions are anti-symmetric with respect to the v axis in Fig. 3, so that a large amplitude of $T_1$—$T_2$ can be provided as a tracking signal, and tracking can be controlled stably. In general, the tracking signal T is given as follows:

$$T = T_1 - T_2 = -4\frac{\varepsilon}{p}\sin\left(\frac{\pi\delta}{p}\right)\sin \omega t \qquad (10)$$

Assumption is made that the reference signal with frequency $fo = \omega/2\pi$ provides the highest voltage when the wobbling V-shape groove is displaced farthest to the outer side of the disk (positive direction on the ξ axis). Namely, the reference signal is given as a sin ωt (a>0). In tracking the slant c, if the tracking signal is in-phase with the reference signal (δ<0), the laser spot must be corrected to move outward on the disk, and if the tracking signal is out of phase, the spot must be carried to move inward on the disk. Fig. 7, (a) shows three traces of the laser spot for the correct tracking, tracking with displacement +δ, and tracking with displacement −δ on a wobbling V-shaped groove. Reference number 4 denotes an information pit. In (a) of Fig. 7, upper and lower portions correspond respectively to outside and inside portions of the disk, and the V-shaped groove wobbles with the peak to peak amplitude 2ε in the vertical direction in the Figure (corresponding to the radial direction of the disk). Fig. 7, (b) shows the reference signal a sin ωt. If the track is displaced by +δ, the reflection light intensity for tracking varies as shown in Fig. 7, (c) in the opposite phase relationship to the reference signal, and if the track is displaced by −δ, the reflection light intensity varies as shown in Fig. 7, (d) in the in-phase relationship with the reference signal. To carry out tracking on slants B and D by using the signal T, the polarity of tracking must be altered. Namely, if the signal T is in-phase with the reference signal, the laser spot must be corrected to move inward on the disk, or if it is out of phase, the spot must be corrected to move outward.

Figs. 8a and 8b show some examples of the shape of a photo-detector. The photo-detector shown in Fig. 8a is disclosed in Japanese Patent Laid-open specification No. 57-105828, wherein region M is used for reproducing information signals on slant C, while region N is used for reproducing information signals on slants B and D. In addition, signals $T_M$ and $T_N$ with the frequency fo=$\omega$/2$\pi$ are extracted from M and N, and the tracking signal $T_M$—$T_N$ can be produced.

In another example shown in Fig. 8b, information signals are reproduced by regions M and N as in the case of the arrangement in Fig. 8a, while the tracking signal is produced using regions $S_3$ and $S_4$. Alternatively, the tracking signal can be produced by obtaining a sum signal derived from regions M and $S_3$ and a sum signal derived from N and $S_4$, by extracting therefrom signals dependent on sin $\omega$t and by producing a subtraction signal between the extracted signals.

It is known that tracking is possible for the conventional disk, where information pits are pre-formed on the same plane, by the arrangement of wobbling pits as shown in Fig. 9 (refer to Japanese Patent Publication No. 57-21770). This method, however, has a drawback that the pit alignment does not coincide with the trace of the laser spot, causing the amplitude of reproduced signal to vary at frequency 2fo. As can be seen from the foregoing description of the preferred embodiment of the invention, the wobbling-type tracking is applicable to information tracks formed on the slants of V-shape grooves. In addition, according to the preferred embodiment of the invention, pits 4 are aligned in parallel to the trace of the laser spot as shown in Fig. 7, that eliminates the disadvantageous swing or fluctuation of the amplitude of reproduced signal. It will be apparent that the present invention can be applied to any of spiral groove disk and concentrical-grooves disk.

According to the present invention, as described above, V-shape grooves are formed in a wobbling fashion at a specified frequency, and tracking on each slant of each V-shape groove can be performed stably.

**Claims**

1. An optical disc having a V-shaped groove with a pair of slant faces, said slant faces being adapted for recording information thereon in spiral or concentric tracks, said disc being characterised in that said groove is formed to wobble radially along the track direction of the disc and at a predetermined spatial frequency.

2. A method of tracking an information track on an optical disc having a V-shaped groove with a pair of slant faces, said slant faces being adapted for recording information thereon in spiral or concentric tracks, said groove being formed to wobble radially along the track direction of the disc and at a predetermined spatial frequency, the method comprising the steps of:

    (a) focusing a laser beam to a spot o a slant of the V-shaped groove;

    (b) sensing intensity variations in laser light reflected from said slant face of the V-shaped groove;

    (c) deriving a signal component having a frequency corresponding to said spatial frequency; and

    (d) comparing the phase of the signal component with the phase of a reference signal and displacing the laser spot radially inwardly or outwardly of a tracking path depending on the respective slope of the slant face and with a magnitude depending on the detected amplitude of said signal component.

**Patentansprüche**

1. Optische Platte, die eine V-förmige Rille mit einem Paar schräggestellter Seitenflächen aufweist, wobei auf den schräggestellten Seitenflächen Information in spitalförmigen oder konzentrischen Spuren aufzeichenbar ist und die Platte dadurch gekennzeichnet ist, daß die Rille dahingehend ausgebildet ist, längs der Spurrichtung der Platte und mit einer vorbestimmten räumlichen Frequenz radial zu wobbeln.

2. Verfahren zur Nachführung längs einer Informationsspur auf einer optischen Platte, die eine V-förmige Rille mit einem Paar schräggestellter Seitenflächen aufweist, wobei auf den schräggestellten Seitenflächen Information in spiralförmigen oder konzentrischen Spuren aufzeichenbar ist und die rille dahingehend ausgebildet ist, längs der Spurrichtung der Platte mit einer vorbestimmten räumlichen Frequenz radial zu wobbeln, wobei das Verfahren die Schritte aufweist.

    (a) Fokussieren eines Laserstrahls zu einem Punkt auf einer Schräge der V-förmigen Rille,

    (b) Erfassen von Intensitätsänderungen in dem von der schräggestellten Seitenfläche der V-förmigen Rille reflektierten Laserlicht,

    (c) Gewinnung einer Signalkomponente, die eine der räumlichen Frequenz entsprechende Frequenz aufweist, und

    (d) Vergleichen der Phase der Signalkomponente mit der Phase eines Bezugssignals und Versetzen des Laserpunktes radial einwärts oder auswärts eines Nachlaufweges in Abhängigkeit von der jeweiligen Neigung der schräggestellten Seitenfläche und mit einer von der erfaßten Amplitude der Signalkomponente abhängigen Größe.

**Revendications**

1. Un disque optique comportant une rainure en forme de V pourvue de deux faces inclinées, lesdites faces inclinées étant adaptées pour un enregistrement d'information dans des pistes spirales ou concentriques, ledit disque étant caractérisé en ce que ladite rainure est formée de façon à osciller radialement dans la direction de piste sur le disque et à une fréquence spatiale prédéterminée.

2. Un procédé de suivi d'une piste d'information sur un disque optique comportant une rainure en forme de V pourvue de deux faces inclinées, lesdites faces inclinées étant adaptées pour un enregistrement d'information dans des pistes spirales ou concentriques, ladite rainure étant formée de façon à osciller radialement dans la direction de piste sur le disque et à une fréquence spatiale prédéterminée, le procédé comprenant les étapes consistant à:

(a) concentrer un faisceau laser sous forme d'un spot sur une paroi inclinée de la rainure en forme de V;

(b) capter des variations d'intensité de la lumière laser réfléchie par ladite face inclinée de la rainure en forme de V;

(c) dériver une composante de signal ayant une fréquence correspondant à ladite fréquence spatiale; et

(d) comparer la phase de la composante de signal avec la phase d'un signal de référence et déplacer le spot de laser radialement vers l'intérieur ou vers l'extérieur d'un trajet de suivi en fonction de la pente respective de la face inclinée et selon une grandeur fonction de l'amplitude détectée de ladite composante de signal.

FIG. 1

LASER BEAM

FIG. 2

FIG. 3

$E_0$

$E_{-1}$

$E_{+1}$

a c  f  e  g  d b u

$E_{-2}$

$E_{+2}$

FIG. 4

o $\xi$

B  C  D

$\Delta$

# FIG. 5

# FIG. 6

FIG. 7

FIG. 8a

M     N

FIG. 8b

M   S₃   S₄   N

FIG. 9
PRIOR ART